Europäisches Patentamt

European Patent Office

Office européen des brevets

(11) Veröffentlichungsnummer: **0 176 677**
**B1**

(12) **EUROPÄISCHE PATENTSCHRIFT**

(45) Veröffentlichungstag der Patentschrift: **27.12.90**

(51) Int. Cl.⁵: **H 01 R 23/02, B 60 D 1/64**

(21) Anmeldenummer: **85108754.4**

(22) Anmeldetag: **12.07.85**

(54) Mehrpolige, lösbare Steckverbindung zum Übertragen von elektrischen Strömen, vorzugsweise zur Verwendung an Kraftfahrzeugen.

(30) Priorität: **06.08.84 DE 3428922**

(43) Veröffentlichungstag der Anmeldung:
**09.04.86 Patentblatt 86/15**

(45) Bekanntmachung des Hinweises auf die
Patenterteilung:
**27.12.90 Patentblatt 90/52**

(84) Benannte Vertragsstaaten:
**AT BE CH DE FR GB IT LI NL SE**

(56) Entgegenhaltungen:
**FR-A-1 300 710**
**FR-A-2 451 118**

(73) Patentinhaber: **Feder, Emil**
**Antonius-Raab-Strasse 1 Industriepark**
**D-3500 Kassel (DE)**

(72) Erfinder: **Feder, Emil**
**Antonius-Raab-Str. 1 Industriepark**
**D-3500 Kassel (DE)**
Erfinder: **Schäfer, Kurt**
**Gottschalkstrasse 43**
**D-3500 Kassel (DE)**

(74) Vertreter: **Habbel, Hans-Georg, Dipl.-Ing.**
**Postfach 3429 Am Kanonengraben 11**
**D-4400 Münster (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf eine mehrpolige, lösbare Steckverbindung zum Übertragen von elektrischen Strömen, vorzugsweise zur Verwendung an Kraftfahrzeugen gemäß dem Oberbegriff des Hauptanspruches.

Üblicherweise muß ein Anhängerfahrzeug über die gleichen Beleuchtungseinrichtungen wie das Zugfahrzeug verfügen, wobei diese Beleuchtungseinrichtungen bei Betrieb in der Funktion übereinstimmen müssen.

Die nach dem Stand der Technik bekannten, lösbaren Steckverbindungen bestehen im allgemeinen aus einer Steckdose mit Deckel und einem bei manchen Fabrikaten herausnehmbaren kreisrunden Einsatz, in den Öffnungen eingearbeitet sind. In diesen Öffnungen befinden sich die Steckkontakte der Pole, und zwar sieben Pole im Stand der Technik, wobei die Pole der Steckdose als Buchsen und/oder Stifte ausgebildet sind. Der zugehörige Stecker enthält hingegen herausragende Stifte bzw. Buchsen in entsprechender Anzahl und spiegelbildlicher Anordnung. Die Anordnung der Buchsen und Stifte ist gleichzeitig so gestaltet, daß sie eine Verdrehsicherung bilden.

Das Gehäuse der Steckdose umschließt den Steckdoseneinsatz und schafft einen Ringspalt um den Einsatz. Das Steckergehäuse umschließt die vorstehenden Stifte und Buchsen. Der Stecker und die Steckdose sind üblicherweise kreisrund ausgebildet und greifen ineinander im eingesteckten Zustand ein, wobei der Stecker mit seinem Steckergehäuse in den Ringspalt der Steckdose eintritt und sich die Stifte und Buchsen von Steckdose und Stecker ineinander einschieben.

Die bisher üblichen, lösbaren Steckverbindungen zum Übertragen von Strömen zwischen Zugfahrzeug und Anhänger sind nicht zufriedenstellend, weil sie zwei am Zugfahrzeug vorkommende Beleuchtungseinrichtungen nicht an den Anhänger übertragen, nämlich den Rückfahrscheinwerfer und die Nebelschlußleuchte. Beim Koppeln des Anhängers mit dem Zugfahrzeug werden also für den Anhänger diese der Sicherheit dienenden Einrichtungen aufgegeben, was insbesondere für den Betrieb der Nebelschlußleuchte ein wesentlicher, die Verkehrssicherheit beeinträchtigender Verlust ist. Eine Abänderung dieses Nachteiles ist mit den bekannten Steckverbindungen nicht möglich, da diese nur sieben Pole aufweist und diese sieben Pole aber bereits durch die bisher verwendeten üblichen Neleuchtungseinrichtungen belegt sind.

Schließlich besteht für viele Anhängerfahrzeugbesitzer die Forderung, daß während der Fahrt eine Möglichkeit gegeben wird, elektrische Daten vom Anhänger zum Zugfahrzeug zu übertragen, z. B. Impulse von Reifenwächtern ggf. elektromagnetischen Bremsen usw.

Es besteht natürlich die Möglichkeit, diese fehlenden elektrischen Kontakte über eine zweite lösbare Steckverbindung an Fahrzeug und Anhänger anzubringen. Dies bringt jedoch nicht nur erhebliche Mehrarbeit und Mehrkosten mit sich, sondern beinhaltet auch eine gewisse Bedienungsunfreundlichkeit. Vor allem sind aber die üblichen Anhänger mit dieser zusätzlichen zweiten Leitung bzw. Steckverbindung nur an den Zugfahrzeugen voll einsatzfähig, die ihrerseits auch eine solche zweite Steckverbindung mit den entsprechend passend geklemmten Polen aufweisen. Die Anhänger sind deshalb von der Funktion der Nebelschlußleuchte und des Rückfahrscheinwerfers bedingt nicht beliebig mit beliebigen Zugfahrzeugen austauschbar, d. h. kompatibel.

Auch stellt der fehlende Platz ein Hindernis gegen die Verwendung einer zweiten Steckverbindung dar. Die Anhängerkupplung, d. h. die Zugvorrichtung am Zugfahrzeug, weist zwar eine Halterung für die elektrische Stromversorgung auf, die allerdings nur Platz für eine Steckdose aufweist. Die zweite Steckdose müßte daher zeit-, material- und kostenaufwendig an der Karosserie bzw. der Anhängerkupplung angebracht werden. Aufgrund dieses Mehraufwandes unterbleibt die an sich wünschenswerte Nachrüstung.

Der Erfindung liegt die Aufgabe zugrunde, eine mehrpolige, lösbare Steckverbindung zum Übertragen von Strömen zwischen Kraftfahrzeug und Anhänger zu schaffen, bei der mehr als die z. Z. üblichen sieben Stromkreise zwischen Fahrzeug und Anhänger übertragen werden können.

Diese der Erfindung zugrundeliegende Aufgabe wird durch die Lehre des Lauptanspruches gelöst.

Vorteilhafte Ausgestaltungen sind in den Unteransprüchen erläutert.

Ein Ausführungsbeispiel der Erfindung wird nachfolgend anhand der Zeichnungen erläutert. Die Zeichnungen zeigen dabei in

Fig. 1 schaubildlich einen erfindungsgemäßen Stecker und in

Fig. 2 schaubidiche eine erfindungsgemäße entsprechend ausgebildete Steckdose.

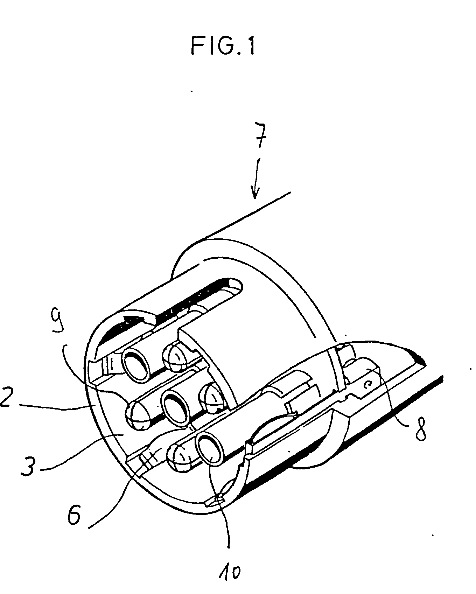

Die erfindungsgemäße Steckverbindung besteht aus dem in Fig. 1 dargestellten Stecker, der ein Steckergehäuse 7 aufweist, das in einen Steckerabschlußring 2 mündet, dessen Innenseite bei 3 erkennbar ist. Der Stecker ist vorzugsweise mit einem Kabel am Anhänger angeordnet, wobei bei 8 eine entsprechende elektrische Anschlußklemme erkennbar ist.

Innerhalb des Steckerabschlußringes 2 sind Stifte 9 und Buchsen 10 angeordnet.

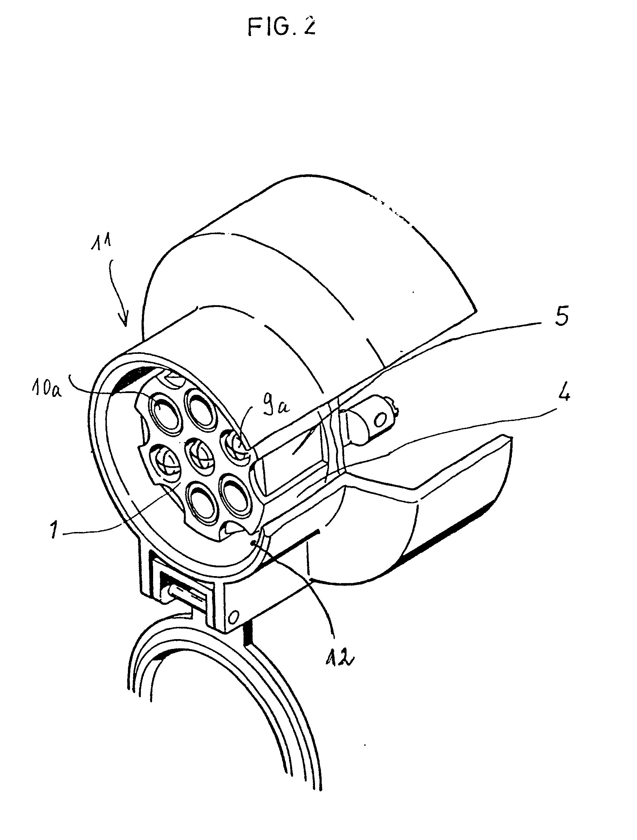

In Fig. 2 ist eine Steckdose dargestellt, wobei das Gehäuse der Steckdose allgemein mit II bezeichnet ist. Das Gehäuse II übergreift einen Steckdoseneinsatz 1, wobei dieser Steckdoseneinsatz Buchsen 10a und Stifte 9a aufweist. Die Stifte 9a arbeiten mit den Buchsen 10 des Steckers zusammen, während die Buchsen 10a mit den Stiften 9 des Steckers zusammenarbeiten.

Der Steckdoseneinsatz 1 schafft zwischen seiner Aussenseite 4 und der Innenseite des Gehäuses der Steckdose 11 einen Ringspalt, der in Fig. 2 bei 12 erkennbar ist und in den der Steckerabschlußring 2 eingeführt werden kann.

Durch die Zuordnung der Stifte 9 und 9a sowie der Buchsen 10 und 10a wird gleichzeitig eine Verdrehsicherung erreicht.

Gemäß der Erfindung sind auf der Außenseite des Steckdoseneinsatzes 4 und auf der Innenseite des Steckerabschlußringes 2 Kontaktelemente angeordnet, die bei dem dargestellten Ausführungsbeispiel als federnde Kontaktzungen 6 im Bereich des Steckers und als fest angeordnete Kontaktzungen 5 im Bereich der Steckdose ausgebildet sind, wobei selbstverständlich auch die Wahl umgekehrt getroffen werden kann, d. h. die festen Kontaktzungen 5 können im Stecker und die federnden Kontaktzungen 6 in der Steckdose vorgesehen werden. Bei dem dargestellten Ausführungsbeispiel sind sechs entsprechend zusammenwirkende Kontaktzungen 5 und 6 vorgesehen, wobei die Erfindung selbstverständlich nicht auf die Anzahl dieser Kontaktzungen beschränkt ist. Die Kontaktzungen bestehen aus entsprechend leitfähigem Material und verändern den kreisförmigen Umfang des Steckdoseneinsatzes 1 bzw. die kreisförmige Innenseite 3 des Steckerabschlußringes nicht.

Diese Kontaktzungen 5 sollten nach innen versetzt angeordnet werden, damit sie bei Verwendung herkömmlicher Stecker keine Störungen erzeugen können, d. h. gegen den Steckerabschlußring 2 isoliert sind. Entsprechend sind auch auf der Innenseite des Steckerabschlußringes 2 entsprechende Metallzungen federnd so angebracht, daß sie bei herkömmlichen Steckdosen problemlos über den Steckdoseneinsatz 1 geführt werden können.

Durch die versenkte bzw. bündige Anordnung der Kontakte auf dem Außenumfang des siebenpoligen Gehäuseeinsatzes wird gewährleistet, daß reguläre Stecker problemlos darübergreifen und durch die Anordnung mit federnd gelagerten Zungen im Steckerabschlußring wird gewährleistet, daß die Metallzungen beim Nichtvorhandensein der dazugehörigen Kontakte regulärer Steckereinsätze ebenfalls problemlos benutzt werden können.

Eine weitere Ausgestaltungsform der Erfindung ist, die Zungen des Steckers freischwingend in Durchbrüchen im Steckerkranz anzuordnen, und zwar dergestalt, daß sie sich im eingesteckten Zustand mit der Rückseite am Steckdosengehäuse abstützen, um einen sicheren Kontakt zu gewährleisten. Dabei können entweder die Zungen selbst mit ihrer Außenseite mit einer Isolierschicht versehen sein, oder ein besonderer Isolierring wird auf dem Abschlußring des Steckers angeordnet, um einen Kurzschluß zu vermeiden. Zum Korrosionsschutz werden die Stecker mit einer Schutzkappe versehen, welche auf den Stecker aufgeschoben wird und in verwendetem Zustand danebenliegt bzw, mit einem geeigneten Mittel an dem Stecker befestigt ist.

## Patentansprüche

1. Mehrpolige, lösbare Steckverbindung zum Übertragen von elektrischen Strömen, vorzugsweise zur Verwendung an Kraftfahrzeugen mit einem Stecker und einer Steckdose, die zusammenwirkende Stifte (9, 9a) und Buchsen (10, 10a) aufweisen, wobei die Stifte (9a) und die Buchsen (10a) auf einem Steckdoseneinsatz (1) angeordnet sind, der von einem Steckerabschlußring (2) übergreifbar ist, in dessen Innenraum die Buchsen (10) und die Stifte (9) des Steckers vorgesehen sind, dadurch gekennzeichnet, daß weitere Kontaktpole (6) auf der Innenseite des Steckerabschlußringes (2) und weitere Kontaktpole (5) auf der Außenseite des Steckdoseneinsatzes (1) angeordnet sind.

2. Mehrfachverbindungsstecker nach Anspruch 1, dadurch gekennzeichnet, daß die Kontaktpole (6) in Ausnehmungen des Steckerabschlußringes (2) angeordnet sind.

3. Mehrfachverbindungsstecker nach Anspruch 1 und 2, dadurch gekennzeichnet, daß die Kontaktpole (6) federnd im Steckerabschlußring (2) angeordnet sind.

4. Mehrfachverbindungsstecker nach Anspruch 1, dadurch gekennzeichnet, daß die Kontaktpole (5) im Steckdoseneinsatz (1) in entsprechenden Ausnehmungen angeordnet sind.

5. Mehrfachverbindungsstecker nach einem oder mehreren der vorhergehenden Ansprüche, dadurch gekennzeichnet, daß auf der Außenfläche des Steckerabschlußringes (2) und/oder der Innenseite der Steckdose (11) eine Isolierschicht angeordnet ist.

## Revendications

1. Connecteur à fiches, multipôle, amovible, pour le transfert de courants électriques, de préférence pour être utilisé sur des automobiles, comportant une fiche mâle et une fiche femelle, qui présentent des broches (9, 9a) et des douilles (10, 10a) qui coopèrent entre elles, les broches (9a) et les douilles (10a) étant disposées sur une cartouche (1) de la fiche femelle sur laquelle est susceptible de venir se placer un anneau de fermeture (2) de la fiche mâle, dans l'espace intérieur duquel sont prévues les douilles (10) et les broches (9) de la fiche mâle, caractérisé par le fait que d'autres pôles de contact (6) sont disposés sur le côté intérieur de l'anneau de fermeture (2) de la fiche mâle, et d'autres pôles de contact (5), sur le côté extérieur de la cartouche (1) de la fiche femelle.

2. Connecteur multiple à fiches selon la revendication 1, caractérisé par le fait que les pôles de contact (6) sont disposés dans des évidements de l'anneau de fermeture (2) de la fiche mâle.

3. Connecteur multiple à fiches selon l'une des revendications 1 et 2, caractérisé par le fait que les pôles de contact (6) sont disposés élastiquement dans l'anneau de fermeture (2) de la fiche mâle.

4. Connecteur multiple à fiches selon la revendication 1, caractérisé par le fait que les pôles de contact (5) sont disposés dans la cartouche (1) de la fiche femelle dans des évidements correspondants.

5. Connecteur multiple à fiches selon une ou plusieurs des revendications précédentes, caractérisé par le fait qu'une couche isolante est disposée sur la surface extérieure de l'anneau de fermeture (2) de la fiche mâle et/ou le côté intérieur de la fiche femelle (11).

**Claims**

1. A multipolar, releasable plug connection for transmitting electric currents, preferably for use in motor vehicles, comprising a plug and a socket comprising interacting pins (9, 9a) and sockets (10, 10a), the pins (9a) and the sockets (10a) being arranged on a socket insert (1), which can be overlapped by a plug closing ring (2), in whose inner chamber the sockets (10) and the pins (9) of the plug are provided, characterized in that further contact poles (6) are arranged on the inside of the plug closing ring (2) and further contact poles (5) are arranged on the outside of the socket insert (1).

2. A multiple connection plug according to claim 1, characterized in that the contact poles (6) are arranged in recesses in the plug closing ring (2).

3. A multiple connection plug according to claim 1 and claim 2, characterized in that the contact poles (6) are arranged spring-loadedly in the plug closing ring (2).

4. A multiple connection plug according to claim 1, characterized in that the contact poles (5) are arranged in respective recesses in the socket insert (1).

5. A multiple connection plug according to one or more of the preceding claims, characterized in that an insulating layer is arranged on the outer surface of the plug closing ring (2) and/or the inside of the socket (11).

FIG.1

EP 0 176 677 B1

FIG. 2

11

10a

9a

5

4

1

12

2